# EUROPÄISCHE PATENTANMELDUNG

(11) **EP 1 602 842 A1**
(43) Veröffentlichungstag der Anmeldung: **07.12.2005**
(21) Anmeldenummer: 04013241.7
(22) Anmeldetag: 04.06.2004
(51) Int. Cl.: F16C 17/10, G01B 7/14

(54) **Gleitlager mit Sensor zum Ermitteln des Verschlei zustands eines Gleitbelags**

(71) Anmelder: AB SKF, S-415 50 Göteborg (SE)
(72) Erfinder: Lauer, Michael, 66265 Heusweiler (DE); Vermeiren, Karel, 5334 JX Velddriel (NL)
(74) Vertreter: Kohl, Thomas

(57) **Zusammenfassung**

Die Erfindung betrifft ein Gleitlager mit einem ersten Lagerring (1), der eine erste Lagerfläche (4) aufweist und einem zweiten Lagerring (2), der eine zweite Lagerfläche (5) aufweist. Die erste Lagerfläche (4) und die zweite Lagerfläche (5) sind jeweils sphärisch oder zylindrisch ausgebildet und werden durch einen Gleitbelag (3) der zwischen der ersten Lagerfläche (4) und der zweiten Lagerfläche (5) angeordnet ist und an einem der beiden Lagerringe (1, 2) befestigt ist, auf einen Abstand zueinander gehalten. Das erfindungsgemäße Gleitlager weist die Besonderheit auf, dass am ersten Lagerring (1) wenigstens ein Sensor (8) befestigt ist zur Erfassung einer Messgröße, die von der Entfernung des Sensors (8) von der zweiten Lagerfläche abhängt.

## Beschreibung

Die Erfindung betrifft ein Gleitlager mit sphärisch oder zylindrisch ausgebildeten Lagerflächen. Weiterhin betrifft die Erfindung ein Verfahren zur Ermittlung des Verschleißes eines Gleitbelags eines Gleitlagers mit sphärisch oder zylindrisch ausgebildeten Lagerflächen und/oder einer von einem derartigen Gleitlager aufgenommenen Last.

Gleitlager mit sphärischen oder zylindrischen Lagerflächen sind bereits vielfältig bekannt und zeichnen sich in der Regel dadurch aus, dass zwischen den aus einem harten und verschleißfesten Material bestehenden Lagerflächen ein Gleitbelag mit guten Gleiteigenschaften angeordnet ist, der in der Regel aus einem weicheren Material als die Lagerflächen besteht und während der Lebensdauer des Gleitlagers einem Verschleiß unterliegt. Durch diesen Verschleiß ändern sich sowohl die Einstellungen des Gleitlagers, wie beispielsweise die Lagerluft, als auch die Gleiteigenschaften. Dies kann dazu führen, dass das Gleitlager vorgegebene Mindestanforderungen im Laufe der Zeit nicht mehr erfüllt und somit unbrauchbar wird und ersetzt werden muss. Da Gleitlager häufig in einer geschlossenen Bauweise ausgeführt sind, ist der Gleitbelag in der Regel nicht oder allenfalls nur eingeschränkt zugänglich, so dass eine verlässliche Beurteilung des Zustands des Gleitbelags ohne wenigstens eine teilweise Demontage in der Regel nicht möglich ist.

In diesem Zusammenhang ist es aus der DE 201 04 695 U1 bereits bekannt, eine Ermittlung des Zustands von Verschleißplatten insbesondere für Walzgerüste eines Walzwerkes dadurch zu ermöglichen, dass die Verschleißplatten mit Messbohrungen ausgestattet werden, die mittels einer Messvorrichtung vermessen werden können. Alternativ wird in diesem Dokument vorgeschlagen, jeweils einen oder mehrere Messwertaufnehmer für eine Abstandsmessung in die Verschleißplatten einzubauen. Weiterhin können auch Messwertaufnehmer für eine Druckmessung und Messwertaufnehmer für eine Beschleunigungsmessung in die Verschleißplatten eingebaut werden. Mit Hilfe der jeweiligen Messwertaufnehmer kann dann der Verschleiß, der Belastungszustand und die Beschleunigung der jeweiligen Verschleißplatte ermittelt werden.

Bei den Verschleißplatten ist angesichts der relativ großen Dickenabmessungen das Einbringen von Messbohrungen bzw. das Einbauen von Messwertaufnehmern problemlos möglich. Angesichts der in der Regel ungleich dünneren Gleitbeläge ist diese Vorgehensweise jedoch nicht auf Gleitlager mit sphärischen oder zylindrischen Lagerflächen übertragbar.

Der Erfindung liegt die Aufgabe zu Grunde, die Ermittlung des aktuellen Verschleißzustandes der Gleitbeläge bei Gleitlagern mit sphärischen oder zylindrischen Lagerflächen zu erleichtern.

Diese Aufgabe wird durch die Merkmalskombination des Anspruchs 1 gelöst.

Das erfindungsgemäße Gleitlager weist einen ersten Lagerring mit einer ersten Lagerfläche und einen zweiten Lagerring mit einer zweiten Lagerfläche auf. Die erste Lagerfläche und die zweite Lagerfläche sind jeweils sphärisch oder zylindrisch ausgebildet und werden durch einen Gleitbelag, der zwischen der ersten Lagerfläche und der zweiten Lagerfläche angeordnet ist und an einem der beiden Lagerringe befestigt ist, auf einen Abstand zueinander gehalten. Die Besonderheit des erfindungsgemäßen Gleitlagers besteht darin, dass am ersten Lagerring wenigstens ein Sensor befestigt ist zur Erfassung einer Messgröße, die von der Entfernung des Sensors von der zweiten Lagerfläche abhängt.

Die Erfindung hat den Vorteil, dass bei einem derart ausgestatteten Gleitlager jederzeit ohne großen Aufwand der Verschleißzustand des Gleitbelags und/oder die vom Gleitlager aufgenommene Last ermittelbar sind. Insbesondere besteht dabei die Möglichkeit, den Verschleißzustand und/oder die Last fortwährend zu überwachen. Damit können rechtzeitig Wartungsmaßnahmen eingeleitet werden, die Einhaltung von vorgegebenen Betriebsbedingungen überwacht werden oder Messdaten für einen bestimmten Anwendungsfall ermittelt werden.

In einem bevorzugten Ausführungsbeispiel ist der Sensor in einer Ausnehmung im ersten Lagerring angeordnet. Die Ausnehmung ist vorzugsweise zur ersten Lagerfläche hin offen. Auf diese Weise kann der Sensor in den ersten Lagerring integriert werden, so dass keine Änderungen an der Einbauumgebung des Gleitlagers vorgenommen werden müssen. Je nach räumlicher Ausdehnung des Sensors und nach dem verfügbaren Messbereich kann sich der Sensor auch in den Gleitbelag hinein erstrecken. Dadurch kann zum einen die Ausnehmung im ersten Lagerring kleiner ausgebildet werden und zum anderen kann ein Sensor mit einem kleineren Messbereich eingesetzt werden.

Wenn eine möglichst hohe Zuverlässigkeit erreicht werden soll, ist es vorteilhaft, wenigstens einen der Sensoren als Reserve zur Übernahme der Funktion eines ausgefallenen Sensors vorzusehen. Dadurch ist gewährleistet, dass selbst nach einem Sensorausfall noch Messwerte zur Verfügung stehen.

Der Gleitbelag ist vorzugsweise am ersten Lagerring befestigt, so dass der Gleitbelag und der Sensor sich nicht relativ zueinander bewegen.

Mit dem erfindungsgemäßen Verfahren werden der Verschleißzustand eines Gleitbelags, der zwischen zwei Lagerringen eines Gleitlagers mit sphärisch oder zylindrisch ausgebildeten Lagerflächen angeordnet ist, und/oder die von einem derartigen Gleitlager aufgenommene Last ermittelt. Das erfindungsgemäße Verfahren zeichnet sich dadurch aus, dass ein Sensorsignal ausgewertet wird, das vom Abstand der beiden Lagerflächen voneinander abhängt und von wenigstens einem Sensor erzeugt wird, der an einem der beiden Lagerringe befestigt ist.

Mit dem erfindungsgemäßen Verfahren besteht die Möglichkeit, ein und denselben Sensor sowohl für die Ermittlung des Verschleißzustands des Gleitbelags als auch der vom Gleitlager aufgenommenen Last zu verwenden.

In einem bevorzugten Ausführungsbeispiel werden der Verschleißzustand des Gleitbelags und/oder die vom Gleitlager aufgenommene Last in einer Einbaulage des Gleitlagers ermittelt, in welcher der Sensor in einer Hauptlastzone oder in einer entlasteten Zone angeordnet ist. Diese Geometrie hat den Vorteil, dass lediglich ein Sensor erforderlich ist und dass die Auswertung des Sensorsignals relativ einfach ist. Das zur Ermittlung des Verschleißzustands verwendete Sensorsignal kann unter einem definierten Lastzustand, vorzugsweise bei vernachlässigbarer Belastung des Gleitlagers, ermittelt werden. Auf diese Weise kann vermieden werden, dass eine Beeinflussung des Sensorsignals durch eine belastungsinduzierte Deformation des Gleitbelags hervorgerufen wird.

Die vom Gleitlager aufgenommene Last kann aus einem Sensorsignal für eine vernachlässigbare Last oder einem daraus abgeleiteten Wert und einem Sensorsignal für die aktuelle Last ermittelt werden. Auf diese Weise kann der Einfluss des Verschleißzustands des Gleitbelags auf das Sensorsignal herausgerechnet werden.

Die Ermittlung der vom Gleitlager aufgenommenen Last kann auf Basis des Einfederverhaltens des Gleitbelags erfolgen. Durch das Einfedern des Gleitbelags wird die Belastung in eine Wegstrecke umgesetzt und ist somit relativ leicht messbar. Um möglichst präzise Messergebnisse zu erhalten ist es von Vorteil, wenn für das Gleitlager im Neuzustand unter einem definierten Lastzustand, vorzugsweise bei vernachlässigbarer Belastung des Gleitlagers, ein Sensorsignal ermittelt wird und als Referenzsignal gespeichert wird. Das Referenzsignal kann dann bei der späteren Ermittlung des Verschleißzustands des Gleitbelags und/oder der vom Gleitlager aufgenommenen Last berücksichtigt werden.

Die Erfindung wird im Folgenden anhand der in der Zeichnung dargestellten Ausführungsbeispiele näher erläutert.

Es zeigen:
- Figur 1: ein Ausführungsbeispiel des erfindungsgemäßen Gleitlagers in Schnittdarstellung,
- Figur 2, Figur 3, Figur 4 und Figur 5: das in Figur 1 dargestellte Ausführungsbeispiel des erfindungsgemäßen Gleitlagers für verschiedene Last- und Verschleißzustände jeweils in einer schematischen Schnittdarstellung.

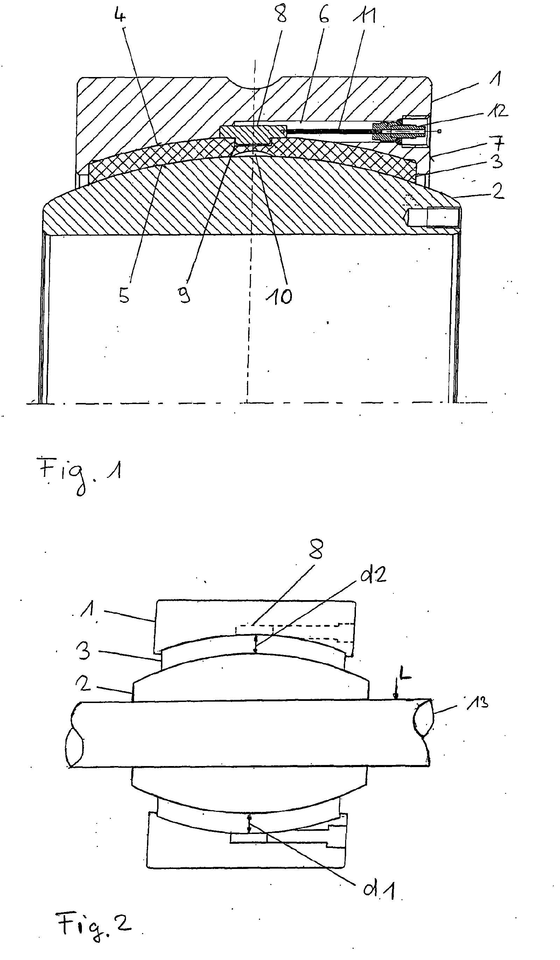

Figur 1 zeigt ein Ausführungsbeispiel des erfindungsgemäßen Gleitlagers in Schnittdarstellung. Das Gleitlager weist einen Außenring 1, einen Innenring 2 und einen Gleitbelag 3 auf, der radial zwischen dem Außenring 1 und dem Innenring 2 angeordnet ist. Der Gleitbelag liegt mit seiner äußeren Radialfläche an einer sphärisch ausgebildeten äußeren Lagerfläche 4 des Außenrings 1 an und ist mit dem Außenring 1 fest verbunden. Mit seiner inneren Radialfläche liegt der Gleitbelag 3 an einer sphärisch ausgebildeten inneren Lagerfläche 5 des Innenrings 2 an und ist auf dieser inneren Lagerfläche 5 gleitend verschiebbar. Der Innenring 1 und der Außenring 2 sind in der Regel aus Stahl gefertigt. Der Gleitbelag 3 kann dagegen beispielsweise aus einem Kunststoffinaterial bestehen.

Der Außenring 1 weist eine Axialbohrung 6 auf, die sich ausgehend von einer axialen Endfläche 7 des Außenrings 1 in das Innere des Außenrings 1 erstreckt. In der axialen Mitte des Außenrings 1 ist ein Sensor 8 in die Axialbohrung 6 eingesetzt. Der Sensor 8 durchdringt die äußere Lagerfläche 4 radial einwärts und ragt in eine dafür vorgesehene Aussparung 9 des Gleitbelags 3 hinein. Zusätzlich zur Aussparung 9 weist der Gleitbelag 3 auf seiner inneren Radialfläche im Bereich der Aussparung 9 eine muldenförmige Vertiefung 10 auf. Die Aussparung 9 und die Vertiefung 10 des Gleitbelags 3 sind nicht zwingend erforderlich und können bei entsprechender Ausbildung des Sensors 8 und abhängig von der gesamten Geometrie auch entfallen. Der Sensor 8 ist über ein Kabel 11 mit einem im Bereich der axialen Endfläche 7 in die Axialbohrung 6 eingelassenen Stecker 12 verbunden.

Im eingebauten Zustand des Gleitlagers ist der Außenring 1 beispielsweise in einem Gehäuse fixiert und der Innenring 2 nimmt eine drehbare und kippbare Welle auf und bewegt sich somit relativ zum Außenring 1. Mit dieser Bewegung geht eine Gleitbewegung zwischen der inneren Radialfläche des Gleitbelags 3 und der inneren Lagerfläche 5 des Innenrings 2 einher. Im Laufe der Zeit führt diese Gleitbewegung zu einem Verschleiß des Gleitbelags 3, der sich in einer reduzierten Dicke des Gleitbelags 3 äußert. Dies hat wiederum zur Folge, dass der Gleitbelag 3 nicht mehr vollflächig an der inneren Lagerfläche 5 anliegt und das Gleitlager mit zunehmendem Verschleiß ein immer größeres Spiel aufweist. Mit anderen Worten, die beiden Lagerflächen 4 und 5 werden durch den Gleitbelag 3 nicht mehr auf einen konstanten Abstand gehalten, sondern der Abstand variiert zwischen einem minimalen Wert d1, bei dem der Gleitbelag 3 an der inneren Lagerfläche 5 anliegt und einem maximalen Abstand d2, der sich auf der dem minimalen Abstand d1 diametral gegenüberliegenden Seite einstellt. Der minimale Abstand d1 oder der maximale Abstand d2 zwischen den beiden Lagerflächen 4 und 5 wird mit dem Sensor 8 erfasst, so dass mit Hilfe des Sensorsignals der jeweils aktuelle Verschleißzustand des Gleitbelags 3 ermittelt werden kann.

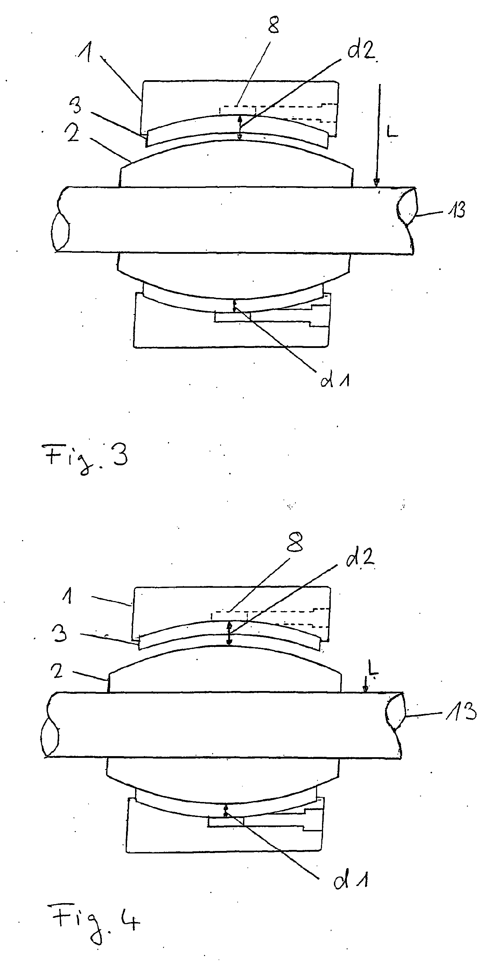

Da das Material des Gleitbelags 3 in der Regel bei Druckeinwirkung elastisch nachgibt, ist die Belastungssituation bei der Auswertung der Sensorsignale zu berücksichtigen. Zudem besteht die Möglichkeit, mit dem selben Sensor 8 unter bestimmten Bedingungen auch die vom Gleitlager aufgenommene Last zu ermitteln. Einzelheiten zur Ermittlung des Verschleißzustandes und zur Ermittlung der Last mit Hilfe des Sensors 8 werden im folgenden beschrieben. Hierzu wird anhand der Figuren 2, 3, 4 und 5 zunächst erläutert, wie sich unterschiedliche Lastzustände und unterschiedliche Verschleißzustände auf die relative Lage der äußeren Lagerfläche 4 und der inneren Lagerfläche 5 zueinander, von der letztendlich das vom Sensor 8 erzeugte Signal abhängt, auswirken.

Die Figuren 2, 3, 4 und 5 zeigen das in Figur 1 dargestellte Ausführungsbeispiel des erfindungsgemäßen Gleitlagers für verschiedene Last- und Verschleißzustände jeweils in einer schematischen Schnittdarstellung. Um die Unterschiede zwischen diesen Zuständen deutlich machen zu können, ist das Gleitlager jeweils vollständig dargestellt. Außerdem ist jeweils eine Welle 13 eingezeichnet, die vom Innenring 2 aufgenommen wird und über die ggf. eine Last in das Gleitlager eingeleitet wird.

Der in Figur 2 dargestellte Zustand zeichnet sich dadurch aus, dass am Gleitbelag 3 noch keinerlei Verschleiß vorliegt und das Gleitlager keine nennenswerte Last aufnimmt. Das Eigengewicht des Gleitlagers wird bei dieser Betrachtung als beliebig kleine Last L angesehen, die vertikal nach unten auf die Welle 13 einwirkt und durch einen Pfeil dargestellt ist. Wie der Figur 2 zu entnehmen ist, liegt der Gleitbelag 3 mit seiner inneren Radialfläche vollflächig an der inneren Lagerfläche 5 des Innenrings 2 an, d. h. das Gleitlager weist kein Spiel auf. Außerdem ist der Abstand zwischen der äußeren Lagerfläche 4 und der inneren Lagerfläche 5 überall gleich groß, so dass insbesondere auch der minimale Abstand d1, der sich bei den in Figur 2 dargestellten Verhältnissen im unteren Bereich des Gleitlagers einstellt, gleich dem maximalen Abstand d2 im oberen Bereich des Gleitlagers ist. Dies bedeutet, dass der Sensor 8 in der durch eine durchgezogenen Linie dargestellten Montageposition im unteren Bereich des Gleitlagers und in der durch eine gestrichelte Linie dargestellten Montageposition im oberen Bereich des Gleitlagers gleiche Sensorsignale liefert.

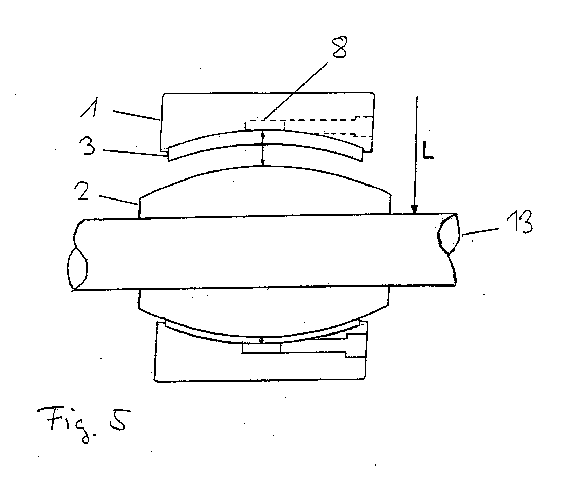

In Figur 3 weist der Gleitbelag 3 ebenfalls keinen Verschleiß auf. Allerdings wird das Gleitlager im Gegensatz zu Figur 2 belastet. Die Last L wird dabei in der Darstellung der Figur 3 in einer Richtung vertikal nach unten in den unteren Bereich des Innenrings 2 eingeleitet. Eine derartige Belastung des Gleitlagers entsteht beispielsweise im Stillstand durch das Gewicht eines auf der Welle 13 montierten Maschinenteils. Die Belastung des Innenrings 2 hat zur Folge, dass der Gleitbelag 3 in der belasteten Zone, d. h. in der Darstellung der Figur 3 im unteren Bereich, gestaucht wird und dadurch der minimale Abstand d1 zwischen der äußeren Lagerfläche 4 und der inneren Lagerfläche 5 verglichen mit Figur 2 verringert ist. Im gleichen Maße, wie sich der minimale Abstand d1 in der belasteten Zone verringert, vergrößert sich der maximale Abstand d2 zwischen der äußeren Lagerfläche 4 und der inneren Lagerfläche 5 in der entlasteten Zone, d. h. in der Darstellung der Figur 3 im oberen Bereich des Gleitlagers. Somit kann die durch die Belastung verursachte Stauchung des Gleitbelags 3 sowohl in der belasteten Zone als auch in der entlasteten Zone ermittelt werden. Der Sensor kann somit wahlweise in der belasteten oder in der entlasteten Zone angeordnet werden und erfasst jeweils einen verglichen mit Figur 2 betragsmäßig gleiche Änderung des Abstands zwischen den Lagerflächen 4 und 5.

In Figur 4 ist ein Zustand dargestellt, bei dem das Gleitlager nicht belastet wird, jedoch bereits ein Verschleiß am Gleitbelag 3 vorliegt. Dieser Verschleiß äußert sich dadurch, dass die radialen Abmessungen des Gleitbelags 3 verglichen mit Figur 2 reduziert sind. Allerdings sind diese radialen Abmessungen, einen gleichmäßigen Verschleiß vorausgesetzt, überall gleich. Insbesondere sind die radialen Abmessungen in der Darstellung der Figur 4 im oberen und im unteren Bereich des Gleitlagers jeweils gleich. Dennoch ist der minimale Abstand d1 zwischen den beiden Lagerflächen 4 und 5 im unteren Bereich des Gleitlagers deutlich geringer als der maximale Abstand d2 zwischen den beiden Lagerflächen 4 und 5 im oberen Bereich. Dies resultiert daraus, dass der Innenring 2 in Folge seines Eigengewichts im unteren Bereich des Gleitlagers mit seiner inneren Lagerfläche 5 am Gleitbelag 3 anliegt und damit im oberen Bereich ein radialen Zwischenraum zwischen der inneren Lagerfläche 5 und dem Gleitbelag 3 entsteht. Wie bei Figur 3 kann auch bei Figur 4 der Abstand zwischen den beiden Lagerflächen 4 und 5 sowohl im unteren als auch im oberen Bereich gemessen werden. Da der Abstand vom Verschleißzustand des Gleitbelags 3 abhängt, kann aus den Sensorsignalen dieser Verschleißzustand jeweils aktuell ermittelt werden. Bei der Durchführung der Messung ist allerdings zu beachten, dass eine Änderung des minimalen Abstandes d1 oder des maximalen Abstands d2 zwischen den beiden Lagerflächen 4 und 5 zwar mit Hilfe des Sensors 8 ermittelt werden kann, der Sensor 8 jedoch darüber hinaus nicht die Ursache für die Änderung der Abstände d1 und d2 erfassen kann. Es ist daher erforderlich, die Bedingungen bei der Erzeugung der Sensorsignale und die Auswertung der Sensorsignale jeweils so vorzunehmen, dass tatsächlich Rückschlüsse auf den Verschleißzustand des Gleitbelags 3 möglich sind. Wie hier im Einzelnen vorzugehen ist, wird im Folgenden noch erläutert.

Figur 5 zeigt schließlich eine Situation, bei der der Gleitbelag 3 bereits einem gewissen Verschleiß unterliegt und zudem eine Last L auf das Gleitlager einwirkt. Es handelt sich somit um eine Kombination der in den Figuren 3 und 4 dargestellten Zustände. Im Ergebnis ist der Gleitbelag 3 in der belasteten Zone bei der gleichen einwirkenden Last L, wie in Figur 3 dargestellt, auf eine geringere radiale Erstreckung als in Figur 3 gestaucht, so dass der minimale Abstand d1 zwischen den beiden Lagerflächen 4 und 5 in entsprechender Weise geringer ist als der in Figur 3 dargestellte minimale Abstand d1. Damit zusammenhängend ist der maximale Abstand d2 zwischen den beiden Lagerflächen 4 und 5 in der entlasteten Zone größer als in Figur 3. Das von dem Sensor 8 ausgegebene Signal ist somit ein Maß für die Summe der durch den Verschleiß des Gleitbelags 3 und durch die Belastung des Innenrings 2 gegenüber einem neuwertigen, unbelasteten Gleitlager auftretenden Änderung des minimalen Abstands d1 bzw. des maximalen Abstands d2. Wie im Folgenden noch näher erläutert wird, ist es im Rahmen des erfindungsgemäßen Verfahrens möglich, trotz der Überlagerung der beiden Effekte aus dem Sensorsignal wahlweise den Verschleißzustand des Gleitbelags 3 oder die auf das Gleitlager wirkende Last L zu ermitteln.

Zur Ermittlung des Verschleißzustandes des Gleitbelags 3 wird folgendermaßen vorgegangen:

Das Gleitlager wird durch Unterstützung der Welle 13 oder andere Maßnahmen in einen unbelasteten Zustand gebracht. Streng genommen, wird der Gleitbelag zwar durch das Eigengewicht des Innenrings 2 belastet. Die dadurch verursachte Belastung ist allerdings so gering, dass daraus keine nennenswerte Stauchung des Gleitbelags 3 resultiert. In diesem unbelasteten Zustand wird der minimale Abstand d1 oder der maximale Abstand d2 zwischen den beiden Lagerflächen 4 und 5 mit Hilfe des Sensors 8 ermittelt. Aus dem so ermittelten Wert kann beispielsweise durch Vergleich mit einem Referenzwert für den Gleitbelag 3 im unverschlissenen Zustand der Verschleißzustand des Gleitbelags 3 ermittelt werden. Um besonders genaue Ergebnisse zu erhalten, kann der Referenzwert individuell für das Gleitlager vorgegeben werden, indem mit dem Gleitlager im Neuzustand eine Messung unter sonst gleichen Bedingungen durchgeführt wird und das so ermittelte Sensorsignal als Referenzwert dokumentiert wird. Prinzipiell ist es auch möglich, den Verschleißzustand unter Belastung zumindest näherungsweise zu ermitteln. In diesem Fall wird zuvor der Referenzwert bei einer identischen Belastung erstellt.

Zur Ermittlung der jeweils aktuell auf das Lager wirkenden Last ist es erforderlich, den Einfluss des Verschleißzustandes des Gleitbelags 3 auf das Messergebnis zu eliminieren. Hierzu kann beispielsweise mit dem Sensor 8 eine Messung am unbelasteten Gleitlager durchgeführt werden. Anschließend wird eine zweite Messung unter sonst gleichen Bedingungen am belasteten Gleitlager vorgenommen. Die aus diesen beiden Messungen resultierende Differenz des Abstandes d1 bzw. d2 zwischen den beiden Lagerflächen 4 und 5 wird ausschließlich durch die Belastung des Gleitlagers hervorgerufen und ist somit ein Maß für die auf das Gleitlager einwirkende Last L. Dies bedeutet, dass erfindungsgemäß mit ein und demselben Sensor 8 sowohl der Verschleißzustand des Gleitbelags 3 als auch die auf das Gleitlager einwirkende Last L ermittelt werden kann.

Prinzipiell ist es auch möglich, den Sensor 8 weder in der belasteten Zone noch in der unbelasteten Zone sondern in einer Zwischenposition anzubringen und dann die vorstehend beschriebenen Messungen durchzuführen. Um auch in diesem Fall eine ausreichende Messgenauigkeit zu erzielen, empfiehlt es sich aber, mehrere Sensoren 8 zu installieren, wobei bevorzugt wenigstens drei Sensoren 8 eingesetzt werden. Angesichts der bekannten Geometrie des Gleitlagers, kann mit Hilfe der von diesen Sensoren erzeugten Sensorsignale eine Rückrechnung auf die Verhältnisse in der belasteten bzw. entlasteten Zone durchgeführt werden, so dass die Auswertung im übrigen auf die bereits geschilderte Weise möglich ist.

Wenn mehrere Sensoren 8 eingesetzt werden, besteht zudem die Möglichkeit, das erfindungsgemäße Verfahren auch dann durchzuführen, wenn einer oder mehrere dieser Sensoren 8 ausgefallen ist. In diesem Fall wird auf die als Reserve vorgehaltenen Sensoren 8 umgeschaltet.

Die mit dem erfindungsgemäßen Verfahren erlangten Informationen über den Verschleißzustand des Gleitbelags 3 und/oder über die auf das Gleitlager einwirkende Last können mit unterschiedlicher Zielsetzung weiter verarbeitet werden. So ist es beispielsweise möglich, diese Werte in ein Überwachungssystem einzuspeisen, das einen gegebenenfalls auftretenden übermäßigen Verschleißzustand bzw. eine übermäßige Last L registriert und daraufhin entsprechende Wartungsmaßnahmen bzw. einen Austausch des Gleitlagers veranlasst. Ebenso besteht die Möglichkeit, diese Messwerte lediglich zu registrieren, um Informationen über tatsächliche Belastungs- oder Verschleißzustände für einen bestimmten Anwendungsfall zu ermitteln.

Das erfindungsgemäße Gleitlager kann in Abwandlung der beschriebenen Ausführungsbeispiele statt der sphärisch ausgebildeten Lagerflächen 4 und 5 auch zylindrisch ausgebildete Lagerfläche 4 und 5 aufweisen.

Je nach Ausgestaltung des erfindungsgemäßen Gleitlagers kann der Sensor 8 beispielsweise als induktives oder als kapazitives Messsystem ausgebildet sein.

### Bezugszeichen

- 1: Außenring
- 2: Innenring
- 3: Gleitbelag
- 4: äußere Lagerfläche
- 5: innere Lagerfläche
- 6: Axialbohrung
- 7: axiale Endfläche
- 8: Sensor
- 9: Aussparung
- 10: Vertiefung
- 11: Kabel
- 12: Stecker
- 13: Welle

## Patentansprüche

1. Gleitlager mit einem ersten Lagerring (1), der eine erste Lagerfläche (4) aufweist, und einem zweiten Lagerring (2), der eine zweite Lagerfläche (5) aufweist, wobei die erste Lagerfläche (4) und die zweite Lagerfläche (5) jeweils sphärisch oder zylindrisch ausgebildet sind und durch einen Gleitbelag (3), der zwischen der ersten Lagerfläche (4) und zweiten Lagerfläche (5) angeordnet ist und an einem der beiden Lagerringe (1, 2) befestigt ist, auf einen Abstand zueinander gehalten werden, **dadurch gekennzeichnet, dass** am ersten Lagerring (1) wenigstens ein Sensor (8) befestigt ist zur Erfassung einer Messgröße, die von der Entfernung des Sensors (8) von der zweiten Lagerfläche abhängt.

2. Gleitlager nach Anspruch 1, **dadurch gekennzeichnet, dass** der Sensor (8) in einer Ausnehmung (6) im ersten Lagerring (1) angeordnet ist.

3. Gleitlager nach Anspruch 2, **dadurch gekennzeichnet, dass** die Ausnehmung (6) zur ersten Lagerfläche (4) hin offen ist.

4. Gleitlager nach einem der vorhergehenden Ansprüche, **dadurch gekennzeichnet, dass** sich der Sensor (8) in den Gleitbelag (3) hinein erstreckt.

5. Gleitlager nach einem der vorhergehenden Ansprüche, **dadurch gekennzeichnet, dass** wenigstens einer der Sensoren (8) als Reserve zur Übernahme der Funktion eines ausgefallenen Sensors (8) vorgesehen ist.

6. Gleitlager nach einem der vorhergehenden Ansprüche, **dadurch gekennzeichnet, dass** der Gleitbelag (3) am ersten Lagerring (1) befestigt ist.

7. Verfahren zum Ermitteln des Verschleißzustands eines Gleitbelags (3), der zwischen zwei Lagerringen (1, 2) eines Gleitlagers mit sphärisch oder zylindrisch ausgebildeten Lagerflächen (4, 5) angeordnet ist, und/oder einer von einem derartigen Gleitlager aufgenommenen Last (L), **dadurch gekennzeichnet, dass** ein Sensorsignal ausgewertet wird, das vom Abstand der beiden Lagerflächen (4, 5) voneinander abhängt und von wenigstens einem Sensor (8) erzeugt wird, der an einem der beiden Lagerringe (1, 2) befestigt ist.

8. Verfahren nach Anspruch 7, **dadurch gekennzeichnet, dass** der Verschleißzustand des Gleitbelags (3) und/oder die vom Gleitlager aufgenommene Last (L) in einer Einbaulage des Gleitlagers ermittelt werden, in welcher der Sensor (8) in einer Hauptlastzone oder in einer entlasteten Zone angeordnet ist.

9. Verfahren nach einem der Ansprüche 7 oder 8, **dadurch gekennzeichnet, dass** das zur Ermittlung des Verschleißzustands verwendete Sensorsignal unter einem definierten Lastzustand, vorzugsweise bei vernachlässigbarer Belastung des Gleitlagers, ermittelt wird.

10. Verfahren nach einem der Ansprüche 7 bis 9, **dadurch gekennzeichnet, dass** die vom Gleitlager aufgenommene Last (L) aus einem Sensorsignal für eine vernachlässigbare Belastung oder einem daraus abgeleiteten Wert und einem Sensorsignal für die aktuelle Belastung ermittelt wird.

11. Verfahren nach einem der Ansprüche 7 bis 10, **dadurch gekennzeichnet, dass** die Ermittlung der vom Gleitlager aufgenommenen Last (L) auf Basis des Einfederverhaltens des Gleitbelags (3) erfolgt.

12. Verfahren nach einem der Ansprüche 7 bis 11, **dadurch gekennzeichnet, dass** für das Gleitlager im Neuzustand unter einem definierten Lastzustand, vorzugsweise bei vernachlässigbarer Belastung des Gleitlagers, ein Sensorsignal ermittelt wird und als Referenzsignal gespeichert wird, das bei der Ermittlung des Verschleißzustands des Gleitbelags (3) und/oder der vom Gleitlager aufgenommenen Last (L) berücksichtigt wird.
